# EUROPEAN PATENT APPLICATION

(11) **EP 4 797 827 A1**
(43) Date of publication of application: **26.08.2026**
(21) Application number: 24883960.7
(22) Date of filing: 21.06.2024
(51) Int. Cl.: H04W 72/04

(54) **PILOT SIGNAL TRANSMISSION METHOD AND APPARATUS, AND SYSTEM**

(30) Priority: 31.10.2023 CN 202311437918
(71) Applicant: HUAWEI TECHNOLOGIES CO., LTD., Shenzhen 518129 (CN)
(72) Inventor: ZHANG, Zhang, Shenzhen, Guangdong 518129 (CN); WANG, Fan, Shenzhen, Guangdong 518129 (CN)
(74) Representative: Maiwald GmbH
(86) International application number: PCT/CN2024/100731
(87) International publication number: WO 2025/091950

(57) **Abstract**

Embodiments of this application provide a pilot signal transmission method, an apparatus, and a system, to reduce correlation between pilot signals in a same time period. The method may be applied to a first terminal apparatus, and includes: generating pilot signals respectively corresponding to at least two time units, where the pilot signals respectively corresponding to the at least two time units are different; and respectively sending the corresponding pilot signals to a network apparatus in the at least two time units.

## Description

This application claims priority to Chinese Patent Application No. 202311437918.8, filed with the China National Intellectual Property Administration on October 31, 2023 and entitled "PILOT SIGNAL TRANSMISSION METHOD, APPARATUS, AND SYSTEM", which is incorporated herein by reference in its entirety.

### TECHNICAL FIELD

This application relates to the field of communication technologies, and in particular, to a pilot signal transmission method, an apparatus, and a system.

### BACKGROUND

In a communication system, a pilot signal is usually used by a transmit end or a receive end to obtain instantaneous channel information. The pilot signal may be, for example, a sounding reference signal (sounding reference signal, SRS) sent by a terminal apparatus to a network apparatus. The SRS may be used to help the network apparatus obtain instantaneous channel information from the terminal apparatus to the network apparatus.

The SRS may include a Zadoff-Chu (Zadoff-Chu, ZC) sequence. Generally, the terminal apparatus may send a ZC sequence to the network apparatus on a symbol. When two terminal apparatuses send ZC sequences with different roots to the network apparatus on a same symbol, a correlation coefficient of the two ZC sequences is high. Therefore, one of pilot signals is greatly interfered with by another pilot signal, and consequently, the network apparatus cannot accurately obtain instantaneous channel information from each terminal apparatus to the network apparatus.

### SUMMARY

Embodiments of this application provide a pilot signal transmission method, an apparatus, and a system, to reduce correlation between pilot signals in a same time period.

To achieve the foregoing objective, the following technical solutions are used in embodiments of this application.

According to a first aspect, a pilot signal transmission method is provided. An apparatus for performing the pilot signal transmission method may be a first terminal apparatus, or may be a module, for example, a chip or a chip system, used in the first terminal apparatus. The pilot signal transmission method includes: generating pilot signals respectively corresponding to at least two time units, where the pilot signals respectively corresponding to the at least two time units are different; and respectively sending the corresponding pilot signals to a network apparatus in the at least two time units.

Technical effects of the pilot signal transmission method provided in embodiments of this application are described by using an example in which two terminal apparatuses respectively send pilot signals in two time units. It is assumed that the first terminal apparatus sends a first pilot signal in a first time unit, and sends a second pilot signal in a second time unit; a second terminal apparatus sends a third pilot signal in the first time unit, and sends a fourth pilot signal in the second time unit; and a correlation coefficient of the first pilot signal and the third pilot signal is a first correlation coefficient, and a correlation coefficient of the second pilot signal and the fourth pilot signal is a second correlation coefficient. When the pilot signal includes a complex sequence, the first correlation coefficient and the second correlation coefficient may be complex numbers. For a same terminal apparatus, the pilot signals respectively corresponding to the at least two time units are different, to be specific, the first pilot signal is different from the second pilot signal, and the third pilot signal is different from the fourth pilot signal. In other words, a pilot signal participating in calculation of the first correlation coefficient is not a pilot signal participating in calculation of the second correlation coefficient. Therefore, there is a high probability that a phase value of the first correlation coefficient and a phase value of the second correlation coefficient are different, so that co-directional superposition of correlation coefficients can be avoided. Energy normalization processing may be performed on the first correlation coefficient and the second correlation coefficient after non-coherent superposition, and an obtained result is less than the first correlation coefficient or the second correlation coefficient. In other words, compared with an existing pilot signal transmission method, the pilot signal transmission method provided in embodiments of this application can effectively reduce correlation of pilot signals in a same time period, so that interference from another pilot signal to one pilot signal is smaller, and the network apparatus can more accurately obtain instantaneous channel information from each terminal apparatus to the network apparatus.

With reference to the first aspect, in a possible implementation, the first terminal apparatus and another terminal apparatus that is different from the first terminal apparatus send different pilot signals in a same time unit. In this solution, because pilot signals sent by different apparatuses in a same time unit are different, a correlation coefficient of the pilot signals sent by the different apparatuses in the same time unit is not an autocorrelation coefficient. Because the autocorrelation coefficient is high, and is usually 1, this solution can further reduce correlation of pilot signals in a same time unit, so that interference from another pilot signal to one pilot signal is smaller, and the network apparatus can more accurately obtain instantaneous channel information from each terminal apparatus to the network apparatus.

With reference to the first aspect, in a possible implementation, the pilot signals respectively corresponding to the at least two time units belong to a pilot signal set, the pilot signal set includes K different pilot signals, and K is a positive integer greater than or equal to 2. For example, the K different pilot signals may respectively include a ZC sequence with x₁ as a root, a ZC sequence with x₂ as a root, ..., and a ZC sequence with x_{K} as a root, where x₁, x₂, ..., and x_{K} are different from each other.

With reference to the first aspect, in a possible implementation, roots of Zadoff-Chu ZC sequences included in the pilot signals respectively corresponding to the at least two time units belong to a root set, the root set includes K different roots, and K is a positive integer greater than or equal to 2. For example, the root set may be a set formed by x₁, x₂, ..., and x_{K}, where x₁, x₂, ..., and x_{K} are different from each other.

With reference to the first aspect, in a possible implementation, the method further includes: receiving indication information from the network apparatus, where the indication information indicates that an identifier of the first terminal apparatus is i, or the indication information indicates an i^{th} row of a first matrix, i is a positive integer less than or equal to K, and K is a positive integer greater than or equal to 2; and generating the pilot signals respectively corresponding to the at least two time units includes: generating, based on the at least two time units, the indication information, and the first matrix, the pilot signals respectively corresponding to the at least two time units. In this solution, the network apparatus may allocate a row index i of the first matrix to the first terminal apparatus, so that the first terminal apparatus may generate, based on the i^{th} row of the first matrix, the pilot signals respectively corresponding to the at least two time units.

With reference to the first aspect, in a possible implementation, the at least two time units include a p^{th} time unit and a q^{th} time unit, p and q are positive integers, and p≠q; and generating, based on the at least two time units, the indication information, and the first matrix, the pilot signals respectively corresponding to the at least two time units includes: generating, based on an element xᵢₚ in the i^{th} row and a p^{th} column of the first matrix, a pilot signal corresponding to the p^{th} time unit; and generating, based on an element x_{iq} in the i^{th} row and a q^{th} column of the first matrix, a pilot signal corresponding to the q^{th} time unit. In this solution, an index of a time unit may be a column index of the first matrix.

With reference to the first aspect, in a possible implementation, xᵢₚ indicates that the pilot signal corresponding to the p^{th} time unit includes a ZC sequence with xᵢₚ as a root, and x_{iq} indicates that the pilot signal corresponding to the q^{th} time unit includes a ZC sequence with x_{iq} as a root. In this solution, the first matrix may be formed by using roots of ZC sequences.

With reference to the first aspect, in a possible implementation, the first matrix is a circulant matrix, or the first matrix is transformed into a circulant matrix through row exchange and/or column exchange.

With reference to the first aspect, in a possible implementation, the first matrix is a Hadamard (Hadamard) product of a second matrix and a third matrix.

With reference to the first aspect, in a possible implementation, xᵢₚ indicates that the pilot signal corresponding to the p^{th} time unit includes a sequence obtained by multiplying a ZC sequence with yᵢₚ as a root by a phase adjustment factor β*ᵢₚ*, yᵢₚ is an element in an i^{th} row and a p^{th} column of the second matrix, and the phase adjustment factor β*ᵢₚ* is an element in an i^{th} row and a p^{th} column of the third matrix; and x_{iq} indicates that the pilot signal corresponding to the q^{th} time unit includes a sequence obtained by multiplying a ZC sequence with y_{iq} as a root by a phase adjustment factor β*_{iq}*, y_{iq} is an element in an i^{th} row and a q^{th} column of the second matrix, and the phase adjustment factor β*_{iq}* is an element in an i^{th} row and a q^{th} column of the third matrix. In this solution, phase rotation weighting is introduced into the third matrix, so that a probability that correlation coefficients of pilot signals sent by different apparatuses in each time unit are different from each other can be increased, and further co-directional superposition of the correlation coefficients can be avoided. Energy normalization processing is performed on a plurality of different correlation coefficients after incoherent superposition, and an obtained result is less than any correlation coefficient. Therefore, compared with an existing pilot signal transmission method, this solution can effectively reduce correlation of pilot signals in a same time period, so that interference from another pilot signal to one pilot signal is smaller, and the network apparatus can more accurately obtain instantaneous channel information from each terminal apparatus to the network apparatus.

With reference to the first aspect, in a possible implementation, the second matrix is a circulant matrix or each row of the second matrix is the same, and the third matrix is a discrete Fourier transform DFT matrix or a Hadamard matrix.

With reference to the first aspect, in a possible implementation, K=2; a sequence included in the pilot signal corresponding to the p^{th} time unit when i=1 and a sequence included in the pilot signal corresponding to the q^{th} time unit when i=2 are conjugate to each other; and a sequence obtained by multiplying, by -1, a sequence included in the pilot signal corresponding to the p^{th} time unit when i=2 and a conjugate sequence of a sequence included in the pilot signal corresponding to the q^{th} time unit when i=1 are a same sequence. In this solution, phase rotation weighting may also be introduced into the sequence obtained by multiplying the sequence by -1 and the conjugate sequence of the sequence, so that a probability that correlation coefficients of pilot signals sent by different apparatuses in each time unit are different from each other can be increased, and further co-directional superposition of the correlation coefficients can be avoided. Energy normalization processing is performed on a plurality of different correlation coefficients after incoherent superposition, and an obtained result is less than any correlation coefficient. Therefore, compared with an existing pilot signal transmission method, this solution can effectively reduce correlation of pilot signals in a same time period, so that interference from another pilot signal to one pilot signal is smaller, and the network apparatus can more accurately obtain instantaneous channel information from each terminal apparatus to the network apparatus.

With reference to the first aspect, in a possible implementation, the sequence included in the pilot signal corresponding to the p^{th} time unit when i=1 is a ZC sequence with x₁ as a root; and the sequence obtained by multiplying, by -1, the sequence included in the pilot signal corresponding to the p^{th} time unit when i=2 is a ZC sequence with x₂ as a root.

With reference to the first aspect, in a possible implementation, that the pilot signals are different includes that roots and/or cyclic shifts of ZC sequences included in the pilot signals are different.

With reference to the first aspect, in a possible implementation, that the pilot signals are different includes that cubic exponential sequences included in the pilot signals differ in at least one of a cubic term, a quadratic term, or a linear term. When the pilot signal includes another type of sequence, "the pilot signals are different" may alternatively have another similar definition. This is not limited in embodiments of this application.

According to a second aspect, a pilot signal transmission method is provided. An apparatus for performing the pilot signal transmission method may be a network apparatus, or may be a module, for example, a chip or a chip system, used in the network apparatus. The pilot signal transmission method includes: respectively receiving, in at least two time units, corresponding pilot signals that are from a first terminal apparatus and that are transmitted through a channel; and estimating the channel between the first terminal apparatus and the network apparatus based on the pilot signals that are transmitted through the channel and that respectively correspond to the at least two time units and pilot signals respectively corresponding to the at least two time units, where the pilot signals respectively corresponding to the at least two time units are different.

With reference to the second aspect, in a possible implementation, the first terminal apparatus and another terminal apparatus that is different from the first terminal apparatus send different pilot signals in a same time unit.

With reference to the second aspect, in a possible implementation, the pilot signals respectively corresponding to the at least two time units belong to a pilot signal set, the pilot signal set includes K different pilot signals, and K is a positive integer greater than or equal to 2.

With reference to the second aspect, in a possible implementation, roots of Zadoff-Chu ZC sequences included in the pilot signals respectively corresponding to the at least two time units belong to a root set, the root set includes K different roots, and K is a positive integer greater than or equal to 2.

With reference to the second aspect, in a possible implementation, the method further includes: sending indication information to the first terminal apparatus, where the indication information indicates that an identifier of the first terminal apparatus is i, or the indication information indicates an i^{th} row of a first matrix, i is a positive integer less than or equal to K, and K is a positive integer greater than or equal to 2; and the at least two time units, the indication information, and the first matrix are used by the first terminal apparatus to generate the pilot signals respectively corresponding to the at least two time units.

With reference to the second aspect, in a possible implementation, the at least two time units include a p^{th} time unit and a q^{th} time unit, p and q are positive integers, and p≠q; and that the at least two time units, the indication information, and the first matrix are used by the first terminal apparatus to generate the pilot signals respectively corresponding to the at least two time units includes: An element xᵢₚ in the i^{th} row and a p^{th} column of the first matrix is used by the first terminal apparatus to generate a pilot signal corresponding to the p^{th} time unit; and an element x_{iq} in the i^{th} row and a q^{th} column of the first matrix is used by the first terminal apparatus to generate a pilot signal corresponding to the q^{th} time unit.

With reference to the second aspect, in a possible implementation, xᵢₚ indicates that the pilot signal corresponding to the p^{th} time unit includes a ZC sequence with xᵢₚ as a root, and x_{iq} indicates that the pilot signal corresponding to the q^{th} time unit includes a ZC sequence with x_{iq} as a root.

With reference to the second aspect, in a possible implementation, the first matrix is a circulant matrix, or the first matrix is transformed into a circulant matrix through row exchange and/or column exchange.

With reference to the second aspect, in a possible implementation, the first matrix is a Hadamard (Hadamard) product of a second matrix and a third matrix.

With reference to the second aspect, in a possible implementation, xᵢₚ indicates that the pilot signal corresponding to the p^{th} time unit includes a sequence obtained by multiplying a ZC sequence with yᵢₚ as a root by a phase adjustment factor β*ᵢₚ*, yᵢₚ is an element in an i^{th} row and a p^{th} column of the second matrix, and the phase adjustment factor β*ᵢₚ* is an element in an i^{th} row and a p^{th} column of the third matrix; and x_{iq} indicates that the pilot signal corresponding to the q^{th} time unit includes a sequence obtained by multiplying a ZC sequence with y_{iq} as a root by a phase adjustment factor β*_{iq}*, y_{iq} is an element in an i^{th} row and a q^{th} column of the second matrix, and the phase adjustment factor β*_{iq}* is an element in an i^{th} row and a q^{th} column of the third matrix.

With reference to the second aspect, in a possible implementation, the second matrix is a circulant matrix or each row of the second matrix is the same, and the third matrix is a discrete Fourier transform DFT matrix or a Hadamard matrix.

With reference to the second aspect, in a possible implementation, K=2; a sequence included in the pilot signal corresponding to the p^{th} time unit when i=1 and a sequence included in the pilot signal corresponding to the q^{th} time unit when i=2 are conjugate to each other; and a sequence obtained by multiplying, by -1, a sequence included in the pilot signal corresponding to the p^{th} time unit when i=2 and a conjugate sequence of a sequence included in the pilot signal corresponding to the q^{th} time unit when i=1 are a same sequence.

With reference to the second aspect, in a possible implementation, the sequence included in the pilot signal corresponding to the p^{th} time unit when i=1 is a ZC sequence with x₁ as a root; and the sequence obtained by multiplying, by -1, the sequence included in the pilot signal corresponding to the p^{th} time unit when i=2 is a ZC sequence with x₂ as a root.

With reference to the second aspect, in a possible implementation, that the pilot signals are different includes that roots and/or cyclic shifts of ZC sequences included in the pilot signals are different.

With reference to the second aspect, in a possible implementation, that the pilot signals are different includes that cubic exponential sequences included in the pilot signals differ in at least one of a cubic term, a quadratic term, or a linear term.

According to a third aspect, a communication apparatus is provided, to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus includes a pilot signal generation module and a transceiver module. The pilot signal generation module is configured to generate pilot signals respectively corresponding to at least two time units, where the pilot signals respectively corresponding to the at least two time units are different; and the transceiver module is configured to respectively send the corresponding pilot signals to a network apparatus in the at least two time units.

With reference to the third aspect, in a possible implementation, a first terminal apparatus and another terminal apparatus that is different from the first terminal apparatus send different pilot signals in a same time unit.

With reference to the third aspect, in a possible implementation, the pilot signals respectively corresponding to the at least two time units belong to a pilot signal set, the pilot signal set includes K different pilot signals, and K is a positive integer greater than or equal to 2.

With reference to the third aspect, in a possible implementation, roots of Zadoff-Chu ZC sequences included in the pilot signals respectively corresponding to the at least two time units belong to a root set, the root set includes K different roots, and K is a positive integer greater than or equal to 2.

With reference to the third aspect, in a possible implementation, the transceiver module is further configured to receive indication information from the network apparatus, where the indication information indicates that an identifier of the first terminal apparatus is i, or the indication information indicates an i^{th} row of a first matrix, i is a positive integer less than or equal to K, and K is a positive integer greater than or equal to 2; and that the pilot signal generation module is configured to generate the pilot signals respectively corresponding to the at least two time units includes: generating, based on the at least two time units, the indication information, and the first matrix, the pilot signals respectively corresponding to the at least two time units.

With reference to the third aspect, in a possible implementation, the at least two time units include a p^{th} time unit and a q^{th} time unit, p and q are positive integers, and p≠q; and that the pilot signal generation module is configured to generate, based on the at least two time units, the indication information, and the first matrix, the pilot signals respectively corresponding to the at least two time units includes: generating, based on an element xᵢₚ in the i^{th} row and a p^{th} column of the first matrix, a pilot signal corresponding to the p^{th} time unit; and generating, based on an element x_{iq} in the i^{th} row and a q^{th} column of the first matrix, a pilot signal corresponding to the q^{th} time unit.

With reference to the third aspect, in a possible implementation, xᵢₚ indicates that the pilot signal corresponding to the p^{th} time unit includes a ZC sequence with xᵢₚ as a root, and x_{iq} indicates that the pilot signal corresponding to the q^{th} time unit includes a ZC sequence with x_{iq} as a root.

With reference to the third aspect, in a possible implementation, the first matrix is a circulant matrix, or the first matrix is transformed into a circulant matrix through row exchange and/or column exchange.

With reference to the third aspect, in a possible implementation, the first matrix is a Hadamard (Hadamard) product of a second matrix and a third matrix.

With reference to the third aspect, in a possible implementation, xᵢₚ indicates that the pilot signal corresponding to the p^{th} time unit includes a sequence obtained by multiplying a ZC sequence with yᵢₚ as a root by a phase adjustment factor β*ᵢₚ*, yᵢₚ is an element in an i^{th} row and a p^{th} column of the second matrix, and the phase adjustment factor β*ᵢₚ* is an element in an i^{th} row and a p^{th} column of the third matrix; and x_{iq} indicates that the pilot signal corresponding to the q^{th} time unit includes a sequence obtained by multiplying a ZC sequence with y_{iq} as a root by a phase adjustment factor β*_{iq}*, y_{iq} is an element in an i^{th} row and a q^{th} column of the second matrix, and the phase adjustment factor β*_{iq}* is an element in an i^{th} row and a q^{th} column of the third matrix.

With reference to the third aspect, in a possible implementation, the second matrix is a circulant matrix or each row of the second matrix is the same, and the third matrix is a discrete Fourier transform DFT matrix or a Hadamard matrix.

With reference to the third aspect, in a possible implementation, K=2; a sequence included in the pilot signal corresponding to the p^{th} time unit when i=1 and a sequence included in the pilot signal corresponding to the q^{th} time unit when i=2 are conjugate to each other; and a sequence obtained by multiplying, by -1, a sequence included in the pilot signal corresponding to the p^{th} time unit when i=2 and a conjugate sequence of a sequence included in the pilot signal corresponding to the q^{th} time unit when i=1 are a same sequence.

With reference to the third aspect, in a possible implementation, the sequence included in the pilot signal corresponding to the p^{th} time unit when i=1 is a ZC sequence with x₁ as a root; and the sequence obtained by multiplying, by -1, the sequence included in the pilot signal corresponding to the p^{th} time unit when i=2 is a ZC sequence with x₂ as a root.

With reference to the third aspect, in a possible implementation, that the pilot signals are different includes that roots and/or cyclic shifts of ZC sequences included in the pilot signals are different.

With reference to the third aspect, in a possible implementation, that the pilot signals are different includes that cubic exponential sequences included in the pilot signals differ in at least one of a cubic term, a quadratic term, or a linear term.

According to a fourth aspect, a communication apparatus is provided, to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the communication apparatus includes a transceiver module and a channel estimation module. The transceiver module is configured to respectively receive, in at least two time units, corresponding pilot signals that are from a first terminal apparatus and that are transmitted through a channel; and the channel estimation module is configured to estimate the channel between the first terminal apparatus and a network apparatus based on the pilot signals that are transmitted through the channel and that respectively correspond to the at least two time units and pilot signals respectively corresponding to the at least two time units, where the pilot signals respectively corresponding to the at least two time units are different.

With reference to the fourth aspect, in a possible implementation, the first terminal apparatus and another terminal apparatus that is different from the first terminal apparatus send different pilot signals in a same time unit.

With reference to the fourth aspect, in a possible implementation, the pilot signals respectively corresponding to the at least two time units belong to a pilot signal set, the pilot signal set includes K different pilot signals, and K is a positive integer greater than or equal to 2.

With reference to the fourth aspect, in a possible implementation, roots of Zadoff-Chu ZC sequences included in the pilot signals respectively corresponding to the at least two time units belong to a root set, the root set includes K different roots, and K is a positive integer greater than or equal to 2.

With reference to the fourth aspect, in a possible implementation, the transceiver module is further configured to send indication information to the first terminal apparatus, where the indication information indicates that an identifier of the first terminal apparatus is i, or the indication information indicates an i^{th} row of a first matrix, i is a positive integer less than or equal to K, and K is a positive integer greater than or equal to 2; and the at least two time units, the indication information, and the first matrix are used by the first terminal apparatus to generate the pilot signals respectively corresponding to the at least two time units.

With reference to the fourth aspect, in a possible implementation, the at least two time units include a p^{th} time unit and a q^{th} time unit, p and q are positive integers, and p≠q; and that the at least two time units, the indication information, and the first matrix are used by the first terminal apparatus to generate the pilot signals respectively corresponding to the at least two time units includes: An element xᵢₚ in the i^{th} row and a p^{th} column of the first matrix is used by the first terminal apparatus to generate a pilot signal corresponding to the p^{th} time unit; and an element x_{iq} in the i^{th} row and a q^{th} column of the first matrix is used by the first terminal apparatus to generate a pilot signal corresponding to the q^{th} time unit.

With reference to the fourth aspect, in a possible implementation, xᵢₚ indicates that the pilot signal corresponding to the p^{th} time unit includes a ZC sequence with xᵢₚ as a root, and x_{iq} indicates that the pilot signal corresponding to the q^{th} time unit includes a ZC sequence with x_{iq} as a root.

With reference to the fourth aspect, in a possible implementation, the first matrix is a circulant matrix, or the first matrix is transformed into a circulant matrix through row exchange and/or column exchange.

With reference to the fourth aspect, in a possible implementation, the first matrix is a Hadamard (Hadamard) product of a second matrix and a third matrix.

With reference to the fourth aspect, in a possible implementation, xᵢₚ indicates that the pilot signal corresponding to the p^{th} time unit includes a sequence obtained by multiplying a ZC sequence with yᵢₚ as a root by a phase adjustment factor β*ᵢₚ*, yᵢₚ is an element in an i^{th} row and a p^{th} column of the second matrix, and the phase adjustment factor β*ᵢₚ* is an element in an i^{th} row and a p^{th} column of the third matrix; and x_{iq} indicates that the pilot signal corresponding to the q^{th} time unit includes a sequence obtained by multiplying a ZC sequence with y_{iq} as a root by a phase adjustment factor β*_{iq}*, y_{iq} is an element in an i^{th} row and a q^{th} column of the second matrix, and the phase adjustment factor β*_{iq}* is an element in an i^{th} row and a q^{th} column of the third matrix.

With reference to the fourth aspect, in a possible implementation, the second matrix is a circulant matrix or each row of the second matrix is the same, and the third matrix is a discrete Fourier transform DFT matrix or a Hadamard matrix.

With reference to the fourth aspect, in a possible implementation, K=2; a sequence included in the pilot signal corresponding to the p^{th} time unit when i=1 and a sequence included in the pilot signal corresponding to the q^{th} time unit when i=2 are conjugate to each other; and a sequence obtained by multiplying, by -1, a sequence included in the pilot signal corresponding to the p^{th} time unit when i=2 and a conjugate sequence of a sequence included in the pilot signal corresponding to the q^{th} time unit when i=1 are a same sequence.

With reference to the fourth aspect, in a possible implementation, the sequence included in the pilot signal corresponding to the p^{th} time unit when i=1 is a ZC sequence with x₁ as a root; and the sequence obtained by multiplying, by -1, the sequence included in the pilot signal corresponding to the p^{th} time unit when i=2 is a ZC sequence with x₂ as a root.

According to a fifth aspect, a communication apparatus is provided, including: a processor. The processor is configured to: after being coupled to a memory and reading computer instructions stored in the memory, perform, based on the instructions, the method according to the first aspect or the second aspect.

With reference to the fifth aspect, in a possible implementation, the communication apparatus further includes the memory, and the memory is configured to store the computer instructions.

With reference to the fifth aspect, in a possible implementation, the communication apparatus further includes a communication interface, and the communication interface is used by the communication apparatus to communicate with another device. For example, the communication interface may be a transceiver, an input/output interface, an interface circuit, an output circuit, an input circuit, a pin, a related circuit, or the like.

With reference to the fifth aspect, in a possible implementation, the communication apparatus may be a chip or a chip system. When the communication apparatus is the chip system, the communication apparatus may include the chip, or may include the chip and another discrete device.

With reference to the fifth aspect, in a possible implementation, when the communication apparatus is the chip or the chip system, the communication interface may be an input/output interface, an interface circuit, an output circuit, an input circuit, a pin, a related circuit, or the like on the chip or the chip system. The processor may alternatively be represented as a processing circuit or a logic circuit.

According to a sixth aspect, a communication system is provided, including: a first terminal apparatus that performs the method according to the first aspect, and a network apparatus that performs the method according to the second aspect.

According to a seventh aspect, a computer-readable storage medium is provided. The computer-readable storage medium stores instructions. When the instructions are run on a computer, the computer is enabled to perform the method according to the first aspect or the second aspect.

According to an eighth aspect, a computer program product including instructions is provided. When the computer program product is run on a computer, the computer is enabled to perform the method according to any one of the first aspect or the second aspect.

For technical effects brought by any one of the possible implementations of the second aspect to the eighth aspect, refer to technical effects brought by the first aspect or the different implementations of the first aspect. Details are not described herein again.

### BRIEF DESCRIPTION OF DRAWINGS

FIG. 1 is a diagram of an architecture of a communication system according to an embodiment of this application;
FIG. 2 is a diagram 1 of a structure of a communication apparatus according to an embodiment of this application;
FIG. 3 is a flowchart of a pilot signal transmission method according to an embodiment of this application;
FIG. 4 is a diagram 1 of sending a pilot signal by a first terminal apparatus according to an embodiment of this application;
FIG. 5 is a diagram 2 of sending a pilot signal by a first terminal apparatus according to an embodiment of this application;
FIG. 6 is a diagram 3 of sending a pilot signal by a first terminal apparatus according to an embodiment of this application;
FIG. 7 is a diagram 4 of sending a pilot signal by a first terminal apparatus according to an embodiment of this application;
FIG. 8 is a diagram 2 of a structure of a communication apparatus according to an embodiment of this application; and
FIG. 9 is a diagram 3 of a structure of a communication apparatus according to an embodiment of this application.

### DESCRIPTION OF EMBODIMENTS

For ease of understanding the technical solutions in embodiments of this application, the following first briefly describes technologies or terms related to this application.

### (1) Instantaneous channel information

In wired communication, a transmission medium is stable, which facilitates stable transmission of signals. However, in wireless communication, a wireless transmission environment is of variability and unpredictability, and especially in multi-user communication and/or multi-antenna communication, the wireless transmission environment is more complex. Therefore, it is a key task to cope with the variability and unpredictability brought by the wireless transmission environment.

At a transmit end of a radio signal, if the instantaneous channel information can be used to preprocess a signal or information, wireless transmission can be more matched with an instantaneous channel capacity, to implement more efficient communication. Therefore, the transmit end needs to obtain the instantaneous channel information before sending the signal. Usually, the instantaneous channel information is obtained through channel measurement. The channel measurement may be performed at the transmit end or at a receive end. For example, in a time division multiplexing (time division duplexing, TDD) system, because a channel from the transmit end to the receive end and a channel from the receive end to the transmit end have good reciprocity, the transmit end may obtain the instantaneous channel information by estimating the channel from the receive end to the transmit end. Obviously, the more accurate the instantaneous channel information obtained by the transmit end, the better.

In a cellular communication system, for example, in a long term evolution (long term evolution, LTE) system or a new radio (new radio, NR) system, before a base station transmits data to a user equipment (user equipment, UE), a reference signal transmitted between the UE and the base station may be used to help the base station obtain instantaneous channel information from the base station to the UE. The reference signal may be referred to as an SRS. The base station may configure the UE to periodically send the SRS, or the base station may trigger, by using a mechanism, the UE to aperiodically send the SRS, and the mechanism is also likely to still be used in future cellular communication systems.

A cellular network needs to be networked and serve a plurality of UEs. To avoid mutual interference between SRSs of a plurality of UEs in a cell and between SRSs of a plurality of UEs in different cells, the SRSs need to support a specific capacity, and there is good correlation between the SRSs, that is, low correlation between the SRSs. Specifically, one base station may receive SRSs from a plurality of UEs in a local cell. A plurality of SRSs may occupy orthogonal or non-orthogonal time-frequency resources. Specifically, the plurality of SRSs may preferentially occupy the orthogonal time-frequency resources, so that different users can be distinguished by using different orthogonal sequences included in the SRSs. When the orthogonal time-frequency resources are insufficient, the plurality of SRSs may occupy the non-orthogonal time-frequency resources, so that different users can be distinguished by using different non-orthogonal sequences included in the SRSs. It is assumed that an SRS 1 sent by a UE 1 and an SRS 2 sent by a UE 2 occupy a same time-frequency resource. In this case, lower correlation between the SRS 1 and the SRS 2 indicates that, during a parsing process in which the base station parses the received SRS 1, which is transmitted through a channel, to estimate the channel between the UE 1 and the base station, interference caused to the parsing process by the SRS 2, which is received by the base station and which is transmitted through a channel, is lower. As a result, estimation performed by the base station on the channel between the UE 1 and the base station is more accurate.

At the receive end of the radio signal, the instantaneous channel information also needs to be obtained to implement correct reception and demodulation. A specific obtaining manner may be transmitting, on some specific time-frequency resources, specific information known to both the transmit end and the receive end. The information may be carried in a demodulation reference signal (demodulation reference signal, DMRS). Because the receive end knows the DMRS sent by the transmit end, the receive end may estimate, based on the received DMRS that is transmitted through a channel, the channel from the transmit end to the receive end.

### 2. Capacity of a pilot sequence

In embodiments of this application, "a capacity of a sequence" and "a quantity of sequences" may be replaced with each other. A pilot sequence is a sequence included in a pilot signal. This applies throughout and will not be repeated below.

With development of a multi-antenna technology and an increase of a quantity of users, a quantity of pilot signals that need to be used at the same time, as well as a quantity of SRSs and a quantity of DMRSs, also increases. Therefore, it is urgent to increase the capacity of the pilot sequence.

However, there is an upper limit to an orthogonal capacity of a pilot sequence transmitted on a single symbol. On this basis, if the capacity of the pilot sequence continues to increase, non-orthogonality is introduced between pilot sequences. To reduce impact of non-orthogonality, correlation between non-orthogonal pilot sequences needs to be optimized, that is, the correlation between the non-orthogonal pilot sequences is reduced as much as possible, to reduce energy of mutual interference between the non-orthogonal pilot sequences.

As the orthogonal capacity of the pilot sequence transmitted on the single symbol has a theoretical upper limit, non-orthogonal interference also has a theoretical lower limit.

### 3. Existing pilot sequence generation method

In an LTE system or an NR system, a quantity of pilot sequences is specified. To be specific, for a supported length, a quantity of groups of pilot sequences needs to be greater than or equal to 30.

Generally, for a structured sequence that can be represented by a general term or a formula, a quantity of sequences may be associated with a length of the sequence. A longer length of the sequence indicates a larger quantity of sequences and a larger quantity of sequence groups. In the LTE system or the NR system, sequences of different lengths can be supported. However, structured sequences defined in the system cannot support 30 sequence groups at all lengths, that is, do not meet the foregoing specification on the quantity of pilot sequences. When the structured sequence does not support 30 sequence groups, a sequence with a shorter length may be generated by using a computer generated sequence (computer generated sequence, CGS).

To meet the foregoing specification, in an example where a pilot signal is an SRS in the NR system or a DMRS based on discrete Fourier transform-spread-orthogonal frequency division multiplexing (discrete Fourier transform-spread-orthogonal frequency division multiplexing, DFT-s-OFDM), when a length of a pilot sequence is equal to 30, a pilot sequence may be generated through truncation based on a ZC sequence; when a length of a sequence is greater than 30, a pilot sequence may be generated through cyclic shift extension and lengthening based on a ZC sequence; or when a length of a sequence is less than 30, a pilot sequence may be generated based on the CGS. The DMRS based on DFT-s-OFDM may also be referred to as a transform precoding (transform precoding) enabled DMRS.

It should be noted that a length of a DMRS sequence is not necessarily the same as a length of the ZC sequence. It is assumed that the length of the DMRS sequence is 30. Because optimal correlation performance can be ensured when the length of the ZC sequence is a prime number, the length of the ZC sequence may be 31. In this case, the DMRS sequence whose length is 30 may be obtained by truncating the ZC sequence whose length is 31 into a sequence whose length is 30. In addition, the CGS may be obtained by performing quadrature phase shift keying (quadrature phase shift keying, QPSK) modulation on a computer generated sequence.

Simulation results show that for a sequence whose length is less than 30, there is still room for improvement in correlation performance between CGSs. For a sequence whose length is greater than or equal to 30, different sequence groups are formed by ZC sequences with different roots. A capacity of a ZC sequence may depend on a length of a selected ZC sequence. Theoretically, a maximum quantity of supported sequence groups may be the length of the ZC sequence. Currently, research has shown that if more sequence groups are supported, better channel sounding or channel estimation performance can be obtained.

### 4. Existing pilot sequence transmission method

As described in the background, in the existing pilot sequence transmission method, a single pilot sequence is transmitted on a single symbol. From a perspective of the single pilot sequence, a ZC sequence whose length is a prime number has reached an optimal orthogonal capacity, an optimal non-orthogonal interference boundary, and a non-orthogonal capacity corresponding to the optimal non-orthogonal interference boundary.

To break through the optimal non-orthogonal interference boundary that can be achieved by the single pilot sequence and further reduce correlation between non-orthogonal pilot sequences, embodiments of this application provide a solution of transmitting a plurality of pilot sequences on a plurality of symbols.

The following describes technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

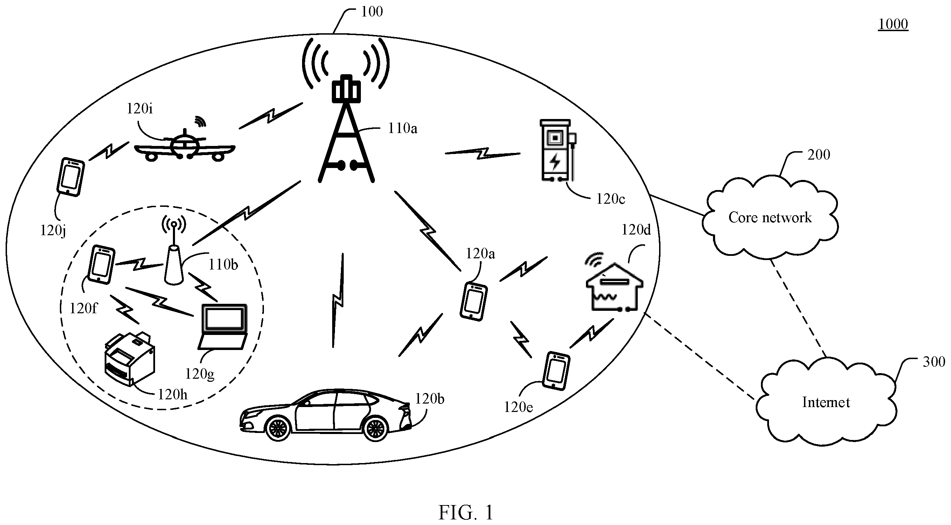

A diagram of an architecture of a mobile communication system shown in FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal apparatus (for example, 120a to 120j in FIG. 1). The terminal apparatus is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal apparatuses may be connected to each other in a wired or wireless manner, and radio access network devices may be connected to each other in a wired or wireless manner. FIG. 1 is merely a diagram. The communication system may further include other network apparatuses, for example, may further include a wireless relay apparatus and a wireless backhaul apparatus, which are not shown in FIG. 1.

The radio access network device is an access device that is accessed by the terminal apparatus to the communication system in a wireless manner. The radio access network device may be a base station (base station), an evolved NodeB (evolved NodeB, eNodeB), an access network device in an open radio access network (open radio access network, ORAN), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like. In another possible scenario, a plurality of radio access network RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. Embodiments of this application may be implemented by the DU or the RU.

The radio access network device may be a macro base station (for example, 110a in FIG. 1), or may be a micro base station or an indoor base station (for example, 110b in FIG. 1), or a relay node, a donor node, or the like. A specific technology and a specific device form that are used by the radio access network device are not limited in embodiments of this application. For ease of description, the following provides descriptions by using an example in which the radio access network device is a base station.

The terminal apparatus is an apparatus having a wireless transceiver function, and may send a signal to the base station, or receive a signal from the base station. The terminal apparatus may also be referred to as a terminal, user equipment (user equipment, UE), a mobile station, a mobile terminal apparatus, or the like. The terminal apparatus may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal apparatus may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal apparatus are not limited in embodiments of this application.

The base station and the terminal apparatus may be fixed or movable. The base station and the terminal apparatus may be deployed on land, including indoors or outdoors, hand-held or vehicle-mounted; may be deployed on water; or may be deployed on an airplane, a balloon, or an artificial satellite. Application scenarios of the base station and the terminal apparatus are not limited in embodiments of this application.

Roles of the base station and the terminal apparatus may be relative. For example, a helicopter or an uncrewed aerial vehicle 120i in FIG. 1 may be configured as a mobile base station. For the terminal apparatus 120j accessing the radio access network 100 via 120i, the terminal apparatus 120i is a base station. However, for the base station 110a, 120i is a terminal apparatus. In other words, communication between 110a and 120i is performed by using a radio air interface protocol. Certainly, 110a and 120i may alternatively communicate with each other by using an interface protocol between the base stations. In this case, compared with 110a, 120i is also a base station. Therefore, both the base station and the terminal apparatus may be collectively referred to as a communication apparatus, 110a and 110b in FIG. 1 may be referred to as communication apparatuses having a function of the base station, and 120a to 120j in FIG. 1 may be referred to as communication apparatuses having a function of the terminal apparatus.

Communication between the base station and the terminal apparatus, between the base stations, or between the terminal apparatuses may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

Functions such as synchronization, channel estimation, and sensing may be implemented between the base station and the terminal apparatus by using a sequence. In embodiments of this application, the base station may receive a pilot signal that is transmitted through a channel and that is from the terminal apparatus, to complete sounding or estimation of an uplink channel. The pilot signal sent by the terminal apparatus to the base station may be an SRS or a DMRS. Similarly, the terminal apparatus may receive a pilot signal that is transmitted through a channel and that is from the base station, to complete sounding or estimation of a downlink channel. Particularly, if the uplink channel and the downlink channel have reciprocity, the sounding or estimation result of the uplink channel may be directly or indirectly applied to the downlink channel.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal apparatus may alternatively be performed by a module (for example, a chip or a modem) in the terminal apparatus, or may be performed by an apparatus including the function of the terminal apparatus.

In this application, the base station sends a downlink signal or downlink information to the terminal apparatus, and the downlink information is carried on a downlink channel. The terminal apparatus sends an uplink signal or uplink information to the base station, and the uplink information is carried on an uplink channel. To communicate with the base station, the terminal apparatus needs to establish a wireless connection to a cell controlled by the base station. The cell having established the wireless connection to the terminal apparatus is referred to as a serving cell of the terminal apparatus. When communicating with the serving cell, the terminal apparatus is further interfered with by a signal from a neighboring cell.

In embodiments of this application, a time domain symbol may be an orthogonal frequency division multiplexing (orthogonal frequency division multiplexing, OFDM) symbol, or may be a DFT-s-OFDM symbol. Unless otherwise specified, all symbols in embodiments of this application are time domain symbols.

For example, a network apparatus 110 provided in embodiments of this application may be 110a or 110b in FIG. 1, and a first terminal apparatus 120 provided in embodiments of this application may be any one of 120a to 120j in FIG. 1.

Optionally, a related function of the first terminal apparatus or the network apparatus in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

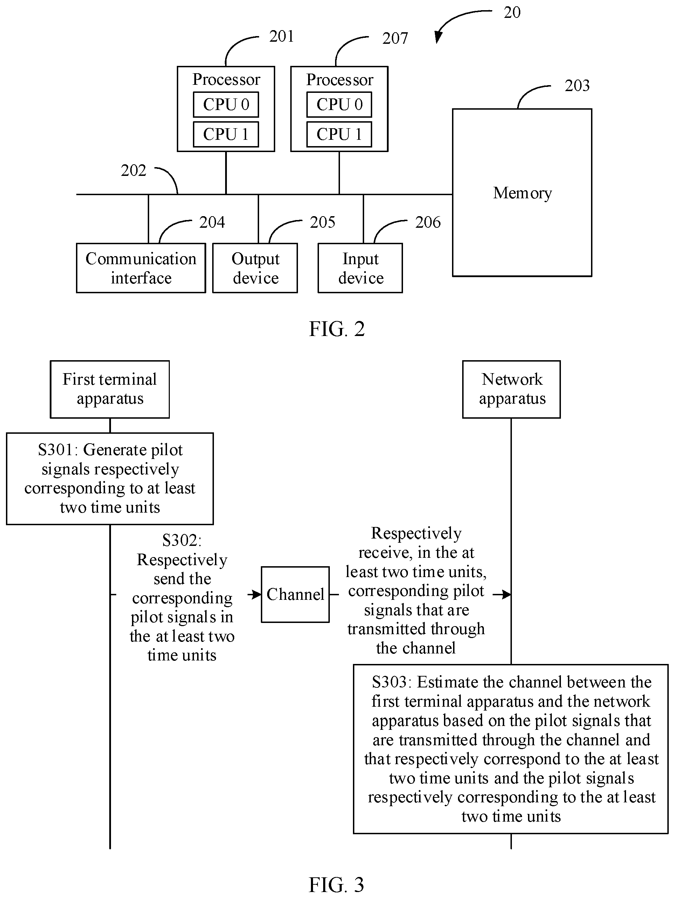

For example, the related function of the first terminal apparatus or the network apparatus in embodiments of this application may be implemented by using a communication apparatus 20 in FIG. 2.

FIG. 2 is a diagram of a structure of a communication apparatus 20 according to an embodiment of this application. The communication apparatus 20 includes one or more processors 201, a communication line 202, and at least one communication interface (FIG. 2 uses only an example in which a communication interface 204 and one processor 201 are included for description). Optionally, the communication apparatus 20 may further include a memory 203.

The processor 201 may be a CPU, a microprocessor, an application-specific integrated circuit (application-specific integrated circuit, ASIC), or one or more integrated circuits for controlling program execution of the solutions of this application.

The communication line 202 may include a path, used to connect different components.

The communication interface 204 may be a transceiver module configured to communicate with another device or a communication network, for example, an Ethernet, a RAN, or a WLAN. For example, the transceiver module may be an apparatus like a transceiver or a transceiver machine. Optionally, the communication interface 204 may alternatively be a transceiver circuit located in the processor 201, and is configured to implement signal input and signal output of the processor.

The memory 203 may be an apparatus having a storage function. For example, the memory 203 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. The memory may exist independently, and is connected to the processor through the communication line 202. The memory may alternatively be integrated with the processor.

The memory 203 is configured to store computer-executable instructions for executing the solutions of this application, and the processor 201 controls the execution. The processor 201 is configured to execute the computer-executable instructions stored in the memory 203, to implement the pilot signal transmission method provided in embodiments of this application.

Alternatively, in this embodiment of this application, the processor 201 may perform processing-related functions in the pilot signal transmission method provided in the following embodiments of this application. The communication interface 204 is responsible for communicating with another device or another communication network. This is not specifically limited in embodiments of this application.

The computer-executable instructions in embodiments of this application may also be referred to as application code. This is not specifically limited in embodiments of this application.

In a specific implementation, in an embodiment, the processor 201 may include one or more CPUs, for example, a CPU 0 and a CPU 1 in FIG. 2.

In a specific implementation, in an embodiment, the communication apparatus 20 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In a specific implementation, in an embodiment, the communication apparatus 20 may further include an output device 205 and an input device 206. The output device 205 communicates with the processor 201, and may display information in a plurality of manners.

The communication apparatus 20 may be a general-purpose apparatus or a dedicated apparatus. For example, the communication apparatus 20 may be a desktop computer, a portable computer, a network server, a palmtop computer (personal digital assistant, PDA), a mobile phone, a tablet computer, a wireless terminal apparatus, a vehicle-mounted terminal apparatus, an embedded device, or a device having a structure similar to that in FIG. 2. A type of the communication apparatus 20 is not limited in embodiments of this application.

The following describes in detail the pilot signal transmission method provided in embodiments of this application with reference to FIG. 1 and FIG. 2.

As shown in FIG. 3, a pilot signal transmission method provided in an embodiment of this application includes the following steps.

Step S301: A first terminal apparatus generates pilot signals respectively corresponding to at least two time units. The pilot signals respectively corresponding to the at least two time units are different.

For example, a time unit in embodiments of this application may be a symbol.

In a possible implementation, in this embodiment of this application, that the pilot signals are different includes that roots and/or cyclic shifts of ZC sequences included in the pilot signals are different. In another possible implementation, in this embodiment of this application, that the pilot signals are different includes that cubic exponential sequences included in the pilot signals differ in at least one of a cubic term, a quadratic term, or a linear term. When the pilot signal includes another type of sequence, "the pilot signals are different" may alternatively have another similar definition. This is not limited in embodiments of this application.

Optionally, the first terminal apparatus and another terminal apparatus that is different from the first terminal apparatus send different pilot signals in a same time unit. In this solution, because pilot signals sent by different apparatuses in a same time unit are different, a correlation coefficient of the pilot signals sent by the different apparatuses in the same time unit is not an autocorrelation coefficient. Because the autocorrelation coefficient is high, and is usually 1, this solution can further reduce correlation of pilot signals in a same time unit, so that interference from another pilot signal to one pilot signal is smaller, and a network apparatus can more accurately obtain instantaneous channel information from each terminal apparatus to the network apparatus.

Optionally, the pilot signals respectively corresponding to the at least two time units belong to a pilot signal set, the pilot signal set includes K different pilot signals, and K is a positive integer greater than or equal to 2. For example, the K different pilot signals may respectively include a ZC sequence with x₁ as a root, a ZC sequence with x₂ as a root, ..., and a ZC sequence with x_{K} as a root, where x₁, x₂, ..., and x_{K} are different from each other.

Optionally, roots of ZC sequences included in the pilot signals respectively corresponding to the at least two time units belong to a root set, the root set includes K different roots, and K is a positive integer greater than or equal to 2. For example, the root set may be a set including x₁, x₂, ..., and x_{K}, where x₁, x₂, ..., and x_{K} are different from each other.

Optionally, the roots of the ZC sequences included in the pilot signals respectively corresponding to the at least two time units may be obtained through calculation according to a preset formula. For an example of the preset formula, refer to an existing standard. A method for selecting a root is not limited in this application.

Optionally, the pilot signal transmission method provided in this embodiment of this application further includes that the network apparatus sends indication information to the first terminal apparatus. Correspondingly, the first terminal apparatus receives the indication information from the network apparatus. The indication information indicates that an identifier of the first terminal apparatus is i, or the indication information indicates an i^{th} row of a first matrix, i is a positive integer less than or equal to K, and K is a positive integer greater than or equal to 2; and that the first terminal apparatus generates the pilot signals respectively corresponding to the at least two time units includes: generating, based on the at least two time units, the indication information, and the first matrix, the pilot signals respectively corresponding to the at least two time units. In this solution, the network apparatus may allocate a row index i of the first matrix to the first terminal apparatus, so that the first terminal apparatus may generate, based on the i^{th} row of the first matrix, the pilot signals respectively corresponding to the at least two time units.

In a possible implementation, the network apparatus may send the i^{th} row of the first matrix to the first terminal apparatus, so that the first terminal apparatus generates, based on the at least two time units and the i^{th} row of the first matrix, the pilot signals respectively corresponding to the at least two time units. In this case, for the first terminal apparatus, the first matrix may be known or unknown. This is not limited in embodiments of this application.

Optionally, the at least two time units include a p^{th} time unit and a q^{th} time unit, p and q are positive integers, and p≠q; and generating, based on the at least two time units, the indication information, and the first matrix, the pilot signals respectively corresponding to the at least two time units includes: generating, based on an element xᵢₚ in the i^{th} row and a p^{th} column of the first matrix, a pilot signal corresponding to the p^{th} time unit; and generating, based on an element x_{iq} in the i^{th} row and a q^{th} column of the first matrix, a pilot signal corresponding to the q^{th} time unit. In this solution, an index of a time unit may be a column index of the first matrix.

Step S302: The first terminal apparatus respectively sends the corresponding pilot signals to the network apparatus in the at least two time units. Correspondingly, the network apparatus respectively receives, in the at least two time units, corresponding pilot signals that are from the first terminal apparatus and that are transmitted through a channel.

In the following example, before a terminal apparatus sends a corresponding pilot sequence on a symbol, the method includes a step in which the terminal apparatus generates the corresponding pilot sequence on the symbol. This applies throughout and will not be repeated below.

In a possible implementation, xᵢₚ indicates that the pilot signal corresponding to the p^{th} time unit includes a ZC sequence with xᵢₚ as a root, and x_{iq} indicates that the pilot signal corresponding to the q^{th} time unit includes a ZC sequence with x_{iq} as a root. In this solution, the first matrix may be formed by using roots of ZC sequences.

Optionally, the first matrix is a circulant matrix, or the first matrix is transformed into circulant matrix through row exchange and/or column exchange.

For example, the first matrix is a K*K circulant matrix. The first matrix may be represented as follows: $\left[\begin{matrix}{x}_{1} & & {x}_{2} & & {x}_{K} \\ & & & ⋯ & \\ {x}_{2} & & {x}_{3} & & {x}_{1} \\ & ⋮ & & ⋱ & ⋮ \\ {x}_{K} & & {x}_{1} & ⋯ & {x}_{K - 1}\end{matrix}\right]$

x₁, x₂, ..., and x_{K} are different from each other. The network apparatus may allocate a first row of the first matrix to a 1^{st} terminal apparatus, allocate a second row of the first matrix to a 2^{nd} terminal apparatus, and by analogy, allocate a K^{th} row of the first matrix to a K^{th} terminal apparatus. Each terminal apparatus may generate, based on a corresponding row, pilot sequences corresponding to K symbols, and sequentially send the corresponding pilot sequences on the K symbols. Specifically, each terminal apparatus may send, on a first symbol, a ZC sequence whose root is a first element in a corresponding row, send, on a second symbol, a ZC sequence whose root is a second element in the corresponding row, and by analogy, send, on a K^{th} symbol, a ZC sequence whose root is a K^{th} element in the corresponding row.

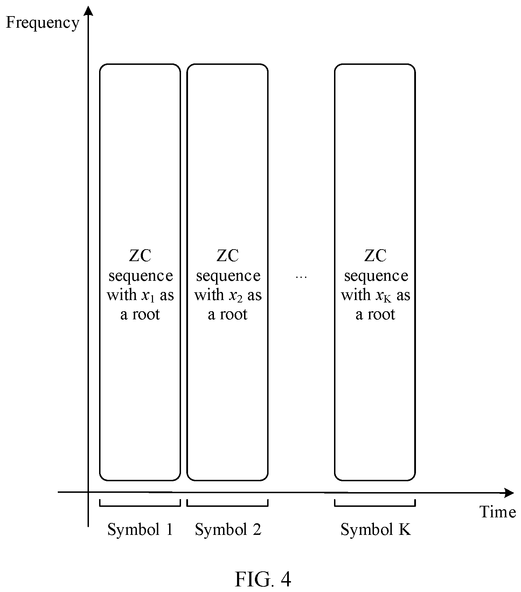

In embodiments of this application, the first terminal apparatus may be any one of the 1^{st} terminal apparatus, the 2^{nd} terminal apparatus, ..., and the K^{th} terminal apparatus in the foregoing example. For example, the first terminal apparatus is the 1^{st} terminal apparatus. FIG. 4 is a diagram of sending a pilot sequence by the first terminal apparatus. The first terminal apparatus may send, on a symbol 1, a ZC sequence whose root is x₁, send, on a symbol 2, a ZC sequence whose root is x₂, and by analogy, send, on a symbol K, a ZC sequence whose root is x_{K}. In addition, pilot sequences sent by the first terminal apparatus on different symbols may occupy a same frequency domain resource.

In another possible implementation, the first matrix is a Hadamard (Hadamard) product of a second matrix and a third matrix.

In this embodiment of this application, that the first matrix is the Hadamard product of the second matrix and the third matrix may be represented as: xᵢₚ=yᵢₚ*βᵢₚ. Herein, i and p are both positive integers less than or equal to K, K is a positive integer greater than or equal to 2, xᵢₚ is an element in an i^{th} row and a p^{th} column of the first matrix, yᵢₚ is an element in an i^{th} row and a p^{th} column of the second matrix, and βᵢₚ is an element in an i^{th} row and a p^{th} column of the third matrix.

Optionally, the network apparatus may send indication information to the first terminal apparatus. Correspondingly, the first terminal apparatus receives the indication information from the network apparatus. The indication information indicates the i^{th} row of the second matrix and a j^{th} row of the third matrix, where i and j are positive integers less than or equal to K, and K is a positive integer greater than or equal to 2. Therefore, the first terminal apparatus may generate, based on the at least two time units and the Hadamard product of the i^{th} row of the second matrix and the j^{th} row of the third matrix, the pilot signals respectively corresponding to the at least two time units.

Similarly, the network apparatus may also send the i^{th} row of the second matrix and the j^{th} row of the third matrix to the first terminal apparatus, so that the first terminal apparatus generates, based on the at least two time units and the Hadamard product of the i^{th} row of the second matrix and the j^{th} row of the third matrix, the pilot signals respectively corresponding to the at least two time units. In this case, for the first terminal apparatus, the second matrix and the third matrix may be known or unknown. This is not limited in embodiments of this application.

Optionally, the second matrix is a circulant matrix or each row of the second matrix is the same, and the third matrix is a discrete Fourier transform (discrete Fourier transform, DFT) matrix or a Hadamard matrix.

For example, the second matrix may be represented as follows: $\left[\begin{matrix}{x}_{1} & & {x}_{2} & & {x}_{K} \\ & & & ⋯ & \\ {x}_{2} & & {x}_{3} & & {x}_{1} \\ & ⋮ & & ⋱ & ⋮ \\ {x}_{K} & & {x}_{1} & ⋯ & {x}_{K - 1}\end{matrix}\right] or \left[\begin{matrix}{x}_{1} & & {x}_{2} & & {x}_{K} \\ & & & ⋯ & \\ {x}_{1} & & {x}_{2} & & {x}_{K} \\ & ⋮ & & ⋱ & ⋮ \\ {x}_{1} & & {x}_{2} & ⋯ & {x}_{K}\end{matrix}\right]$

In the second example of the second matrix, an i^{th} element in each row is xᵢ.

For example, the third matrix is a DFT matrix. The third matrix may be represented as follows: $\left[\begin{matrix}1 & & 1 & & 1 \\ & & & ⋯ & \\ 1 & & {e}^{\frac{2 πj}{K}} & & {e}^{\frac{2 π \left(K-1\right) j}{K}} \\ & ⋮ & & ⋱ & ⋮ \\ 1 & & {e}^{\frac{2 π \left(K-1\right) j}{K}} & ⋯ & {e}^{\frac{2 π {\left(K-1\right)}^{2} j}{K}}\end{matrix}\right]$

Herein, an element ${e}^{\frac{2 πjmn}{K}}$ in the third matrix represents a phase adjustment value of the pilot sequence, where n=0, 1, 2, 3, ..., and K-1, and m=0, 1, 2, 3, ..., and K-1.

Optionally, xᵢₚ indicates that the pilot signal corresponding to the p^{th} time unit includes a sequence obtained by multiplying a ZC sequence with yᵢₚ as a root by a phase adjustment factor β*ᵢₚ*, yᵢₚ is an element in an i^{th} row and a p^{th} column of the second matrix, and the phase adjustment factor β*ᵢₚ* is an element in an i^{th} row and a p^{th} column of the third matrix; and x_{iq} indicates that the pilot signal corresponding to the q^{th} time unit includes a sequence obtained by multiplying a ZC sequence with y_{iq} as a root by a phase adjustment factor β*_{iq}*, y_{iq} is an element in an i^{th} row and a q^{th} column of the second matrix, and the phase adjustment factor β*_{iq}* is an element in an i^{th} row and a q^{th} column of the third matrix.

In this solution, phase rotation weighting is introduced into the third matrix, so that a probability that correlation coefficients of pilot signals sent by different apparatuses in each time unit are different from each other can be increased, and further co-directional superposition of the correlation coefficients can be avoided. Energy normalization processing is performed on a plurality of different correlation coefficients after incoherent superposition, and an obtained result is less than any correlation coefficient. Therefore, compared with an existing pilot signal transmission method, this solution can effectively reduce correlation of pilot signals in a same time period, so that interference from another pilot signal to one pilot signal is smaller, and the network apparatus can more accurately obtain instantaneous channel information from each terminal apparatus to the network apparatus.

For example, the second matrix is the second example, and the third matrix is the foregoing example. The network apparatus may allocate a first row of the first matrix to a 1^{st} terminal apparatus, allocate a second row of the first matrix to a 2^{nd} terminal apparatus, and by analogy, allocate a K^{th} row of the first matrix to a K^{th} terminal apparatus. Each terminal apparatus may generate, based on a corresponding row, pilot sequences corresponding to K symbols, and sequentially send the corresponding pilot sequences on the K symbols. Specifically, each terminal apparatus may send, on a first symbol, a pilot sequence whose root is x₁ and whose phase adjustment value is a first element in a corresponding row, send, on a second symbol, a pilot sequence whose root is x₂ and whose phase adjustment value is a second element in the corresponding row, and by analogy, send, on a Kₜₕ symbol, a pilot sequence whose root is x_{K} and whose phase adjustment value is a Kth element in the corresponding row.

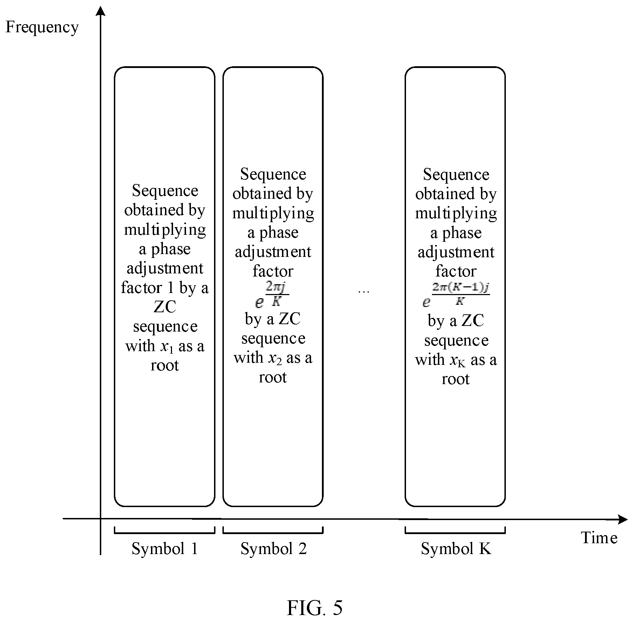

In embodiments of this application, the first terminal apparatus may be any one of the 1^{st} terminal apparatus, the 2^{nd} terminal apparatus, ..., and the K^{th} terminal apparatus in the foregoing example. For example, the first terminal apparatus is the 2^{nd} terminal apparatus. FIG. 5 is a diagram of sending a pilot sequence by the first terminal apparatus. The first terminal apparatus may send, on a symbol 1, a sequence obtained by multiplying a ZC sequence with x₁ as a root by a phase adjustment factor 1, send, on a symbol 2, a sequence obtained by multiplying a ZC sequence with x₂ as a root by a phase adjustment factor ${e}^{\frac{2 πj}{K}}$, and by analogy, send, on a symbol K, a sequence obtained by multiplying a ZC sequence with x_{K} as a root by a phase adjustment factor ${e}^{\frac{2 π \left(K-1\right) j}{K}}$. In addition, pilot sequences sent by the first terminal apparatus on different symbols may occupy a same frequency domain resource.

In another possible implementation, K=2; a sequence included in the pilot signal corresponding to the p^{th} time unit when i=1 and a sequence included in the pilot signal corresponding to the q^{th} time unit when i=2 are conjugate to each other; and a sequence obtained by multiplying, by -1, a sequence included in the pilot signal corresponding to the p^{th} time unit when i=2 and a conjugate sequence of a sequence included in the pilot signal corresponding to the q^{th} time unit when i=1 are a same sequence.

In this solution, phase rotation weighting may also be introduced into the sequence obtained by multiplying the sequence by -1 and the conjugate sequence of the sequence, so that a probability that correlation coefficients of pilot signals sent by different apparatuses in each time unit are different from each other can be increased, and further co-directional superposition of the correlation coefficients can be avoided. Energy normalization processing is performed on a plurality of different correlation coefficients after incoherent superposition, and an obtained result is less than any correlation coefficient. Therefore, compared with an existing pilot signal transmission method, this solution can effectively reduce correlation of pilot signals in a same time period, so that interference from another pilot signal to one pilot signal is smaller, and the network apparatus can more accurately obtain instantaneous channel information from each terminal apparatus to the network apparatus.

Optionally, the sequence included in the pilot signal corresponding to the p^{th} time unit when i=1 is a ZC sequence with x₁ as a root; and the sequence obtained by multiplying, by -1, the sequence included in the pilot signal corresponding to the p^{th} time unit when i=2 is a ZC sequence with x₂ as a root.

For example, the first matrix may be represented as follows: $\left[\begin{matrix}{x}_{1} & {x}_{2}^{∗} \\ - {x}_{2} & {x}_{1}^{∗}\end{matrix}\right]$

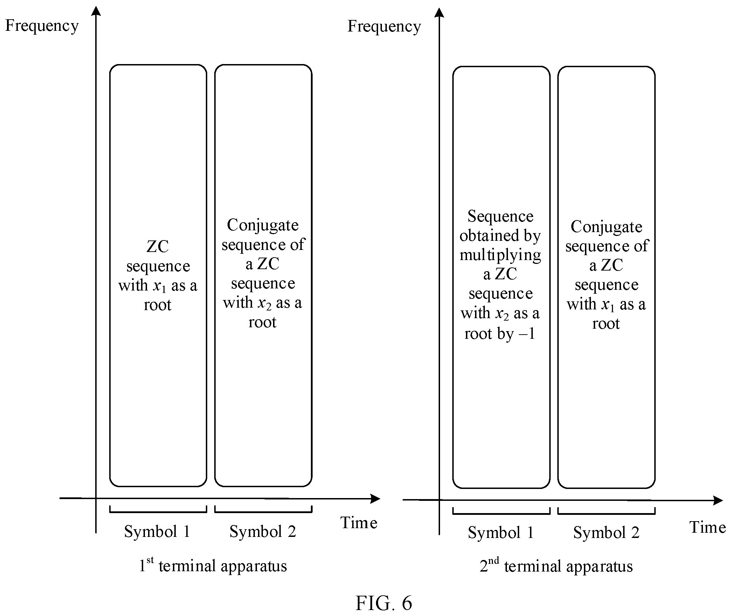

The network apparatus may allocate a first row of the first matrix to a 1^{st} terminal apparatus, and allocate a second row of the first matrix to a 2^{nd} terminal apparatus. Each terminal apparatus may generate, based on a corresponding row, pilot sequences corresponding to two symbols, and sequentially send the corresponding pilot sequences on the two symbols. Specifically, as shown in FIG. 6, the 1^{st} terminal apparatus may send, on a symbol 1, a ZC sequence with x₁ as a root, and send, on a symbol 2, a conjugate sequence of a ZC sequence with x₂ as a root. The 2^{nd} terminal apparatus may send, on a symbol 1, a sequence obtained by multiplying a ZC sequence with x₂ as a root by -1, and send, on a symbol 2, a conjugate sequence of a ZC sequence with x₁ as a root. In addition, pilot sequences sent by each terminal apparatus on different symbols may occupy a same frequency domain resource. For example, the first terminal apparatus in embodiments of this application may be the 1^{st} terminal apparatus or the 2^{nd} terminal apparatus.

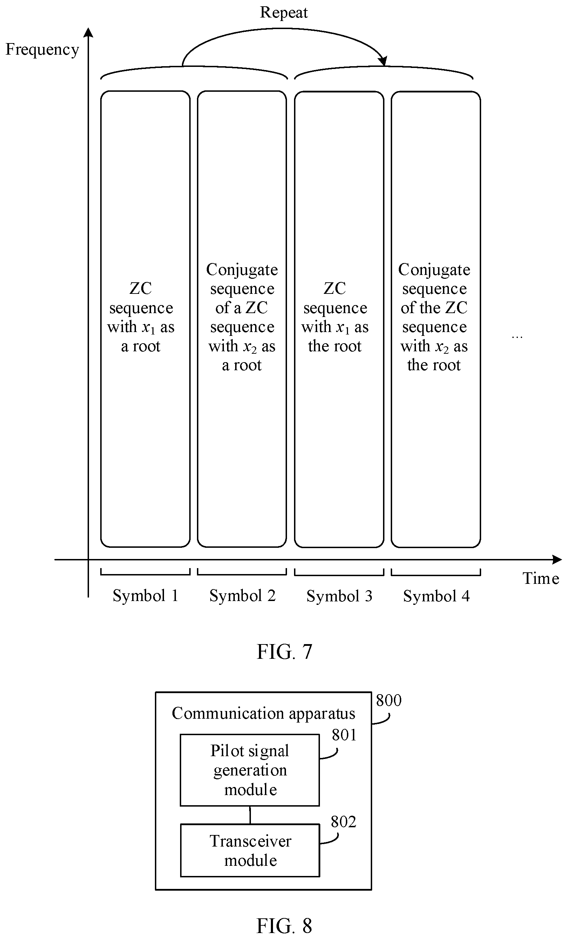

With reference to FIG. 6, the pilot signal transmission method provided in this embodiment of this application is repeatedly performed, and the first terminal apparatus may further send pilot sequences on an even quantity of symbols. For example, the first terminal apparatus is the 1^{st} terminal apparatus. FIG. 7 is a diagram of sending a pilot sequence by the first terminal apparatus. On a symbol 1 and a symbol 2, the first terminal apparatus may send pilot sequences in the manner in FIG. 6. On a symbol 3 and a symbol 4, the first terminal apparatus may repeatedly send the pilot sequences corresponding to the symbol 1 and the symbol 2. To be specific, the first terminal apparatus may send, on the symbol 3, a ZC sequence with x₁ as a root, and send, on the symbol 4, a conjugate sequence of a ZC sequence with x₂ as a root. In other words, the first terminal apparatus may send, on a symbol whose index is an odd number, the ZC sequence with x₁ as the root, and send, on a symbol whose index is an even number, the conjugate sequence of the ZC sequence with x₂ as the root. A quantity of repetitions is not limited in this embodiment of this application.

Step S303: The network apparatus estimates the channel between the first terminal apparatus and the network apparatus based on the pilot signals that are transmitted through the channel and that respectively correspond to the at least two time units and the pilot signals respectively corresponding to the at least two time units.

In step S303, for a method for performing channel estimation by the network apparatus based on the received pilot signals that are transmitted through the channel, refer to an existing channel estimation method. Details are not described herein.

Technical effects of the pilot signal transmission method provided in embodiments of this application are described by using an example in which two terminal apparatuses respectively send pilot signals in two time units. It is assumed that the first terminal apparatus sends a first pilot signal in a first time unit, and sends a second pilot signal in a second time unit; a second terminal apparatus sends a third pilot signal in the first time unit, and sends a fourth pilot signal in the second time unit; and a correlation coefficient of the first pilot signal and the third pilot signal is a first correlation coefficient, and a correlation coefficient of the second pilot signal and the fourth pilot signal is a second correlation coefficient. When the pilot signal includes a complex sequence, the first correlation coefficient and the second correlation coefficient may be complex numbers. For a same terminal apparatus, the pilot signals respectively corresponding to the at least two time units are different, to be specific, the first pilot signal is different from the second pilot signal, and the third pilot signal is different from the fourth pilot signal. In other words, a pilot signal participating in calculation of the first correlation coefficient is not a pilot signal participating in calculation of the second correlation coefficient. Therefore, there is a high probability that a phase value of the first correlation coefficient and a phase value of the second correlation coefficient are different, so that co-directional superposition of correlation coefficients can be avoided. Energy normalization processing may be performed on the first correlation coefficient and the second correlation coefficient after non-coherent superposition, and an obtained result is less than the first correlation coefficient or the second correlation coefficient. In other words, compared with an existing pilot signal transmission method, the pilot signal transmission method provided in embodiments of this application can effectively reduce correlation of pilot signals in a same time period, so that interference from another pilot signal to one pilot signal is smaller, and the network apparatus can more accurately obtain instantaneous channel information from each terminal apparatus to the network apparatus.

It may be understood that, in the foregoing embodiments, the method and/or step implemented by the first terminal apparatus may alternatively be implemented by a component (for example, a chip or a circuit) that can be used in the first terminal apparatus or an apparatus that includes the first terminal apparatus. The method and/or step implemented by the network apparatus may alternatively be implemented by a component (for example, a chip or a circuit) that can be used in the network apparatus or an apparatus that includes the network apparatus.

It may be understood that, to implement the foregoing functions, the first terminal apparatus or the network apparatus includes a corresponding hardware structure and/or software module for performing each of the functions. A person skilled in the art should be easily aware that, with reference to units and algorithm steps in the examples described in embodiments disclosed in this specification, this application can be implemented in a form of hardware or a combination of hardware and computer software. Whether a function is performed in a manner of hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first terminal apparatus or the network apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

For example, the first terminal apparatus in embodiments of this application may be implemented in a form of a communication apparatus 800 shown in FIG. 8. The communication apparatus 800 may include a pilot signal generation module 801 and a transceiver module 802. The communication apparatus 800 is configured to implement the functions of the terminal apparatus in the method embodiments shown in FIG. 3 to FIG. 7.

For example, when the communication apparatus 800 is configured to implement the functions of the first terminal apparatus in the method embodiment shown in FIG. 3, the pilot signal generation module 801 is configured to generate pilot signals respectively corresponding to at least two time units; and the transceiver module 802 is configured to respectively send the corresponding pilot signals to a network apparatus in the at least two time units.

For more detailed descriptions of the pilot signal generation module 801 and the transceiver module 802, refer to related descriptions in the method embodiments shown in FIG. 3 to FIG. 7.

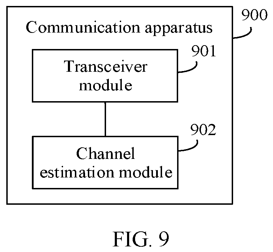

For another example, the network apparatus in embodiments of this application may be implemented in a form of a communication apparatus 900 shown in FIG. 9. The communication apparatus 900 may include a transceiver module 901 and a channel estimation module 902. The communication apparatus 900 is configured to implement the functions of the network apparatus in the method embodiment shown in FIG. 3.

For example, the transceiver module 901 is configured to respectively receive, in at least two time units, corresponding pilot signals that are from a first terminal apparatus and that are transmitted through a channel; and the channel estimation module 902 is configured to estimate the channel between the first terminal apparatus and a network apparatus based on the pilot signals that are transmitted through the channel and that respectively correspond to the at least two time units and pilot signals respectively corresponding to the at least two time units.

For more detailed descriptions of the transceiver module 901 and the channel estimation module 902, refer to related descriptions in the method embodiment shown in FIG. 3.

In embodiments, the communication apparatus 800 or the communication apparatus 900 is presented in a form of functional modules obtained through division performed in an integrated manner. The "module" herein may be a specific ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 800 may be in a form of the communication apparatus 20 shown in FIG. 2.

For example, the processor 201 and/or the processor 207 in the communication apparatus 20 shown in FIG. 2 may invoke the computer-executable instructions stored in the memory 203, so that the communication apparatus 20 performs the pilot signal transmission method in the foregoing method embodiments. Specifically, some functions/implementation processes of the pilot signal generation module 801 in FIG. 8 may be implemented by the processor 201 and/or the processor 207 in the communication apparatus 20 shown in FIG. 2 by invoking the computer-executable instructions stored in the memory 203. Some functions/implementation processes of the transceiver module 802 in FIG. 8 may be implemented by a communication module connected through the communication interface 204 in FIG. 2.

In a simple embodiment, a person skilled in the art may figure out that the communication apparatus 900 may be in a form of the communication apparatus 20 shown in FIG. 2.

For example, the processor 201 and/or the processor 207 in the communication apparatus 20 shown in FIG. 2 may invoke the computer-executable instructions stored in the memory 203, so that the communication apparatus 20 performs the pilot signal transmission method in the foregoing method embodiments. Specifically, some functions/implementation processes of the transceiver module 901 in FIG. 9 may be implemented by a communication module connected through the communication interface 204 in FIG. 2. Some functions/implementation processes of the channel estimation module 902 in FIG. 9 may be implemented by the processor 201 and/or the processor 207 in the communication apparatus 20 shown in FIG. 2 by invoking the computer-executable instructions stored in the memory 203.

The communication apparatus 800 and the communication apparatus 900 provided in embodiments can perform the foregoing pilot signal transmission method. Therefore, for technical effects that can be obtained by the communication apparatus 800 and the communication apparatus 900, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built in an SoC (system-on-a-chip) or an ASIC, or may be an independent semiconductor chip. The processor may further include a necessary hardware accelerator, such as a field programmable gate array (field programmable gate array, FPGA), a PLD (programmable logic device), or a logic circuit that implements special logic operations, in addition to the core for executing software instructions to perform operations or processing.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory through an interface, and when the at least one processor executes a computer program or instructions in the memory, the method in any one of the foregoing method embodiments is performed. In a possible implementation, the communication apparatus further includes the memory. Optionally, the chip system may include a chip, or may include the chip and another discrete device. This is not specifically limited in embodiments of this application.

All or a part of the foregoing embodiments may be implemented by using software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described based on specific features and embodiments thereof, it is clear that various modifications and combinations may be made to this application without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the protection scope defined by the following claims and their equivalent technologies.

## Claims

1. A pilot signal transmission method, applied to a first terminal apparatus, and comprising:
generating pilot signals respectively corresponding to at least two time units, wherein the pilot signals respectively corresponding to the at least two time units are different; and
respectively sending the corresponding pilot signals to a network apparatus in the at least two time units.

2. The method according to claim 1, wherein the first terminal apparatus and another terminal apparatus that is different from the first terminal apparatus send different pilot signals in a same time unit.

3. The method according to claim 1 or 2, wherein the pilot signals respectively corresponding to the at least two time units belong to a pilot signal set, the pilot signal set comprises K different pilot signals, and K is a positive integer greater than or equal to 2.

4. The method according to any one of claims 1 to 3, wherein roots of Zadoff-Chu ZC sequences comprised in the pilot signals respectively corresponding to the at least two time units belong to a root set, the root set comprises K different roots, and K is a positive integer greater than or equal to 2.

5. The method according to any one of claims 1 to 4, wherein the method further comprises:
receiving indication information from the network apparatus, wherein the indication information indicates that an identifier of the first terminal apparatus is i, or the indication information indicates an i^{th} row of a first matrix, i is a positive integer less than or equal to K, and K is a positive integer greater than or equal to 2; and
generating the pilot signals respectively corresponding to the at least two time units comprises:
generating, based on the at least two time units, the indication information, and the first matrix, the pilot signals respectively corresponding to the at least two time units.

6. The method according to claim 5, wherein the at least two time units comprise a p^{th} time unit and a q^{th} time unit, p and q are positive integers, and p≠q; and generating, based on the at least two time units, the indication information, and the first matrix, the pilot signals respectively corresponding to the at least two time units comprises:
generating, based on an element xᵢₚ in the i^{th} row and a p^{th} column of the first matrix, a pilot signal corresponding to the p^{th} time unit; and
generating, based on an element x_{iq} in the i^{th} row and a q^{th} column of the first matrix, a pilot signal corresponding to the q^{th} time unit.

7. The method according to claim 6, wherein xᵢₚ indicates that the pilot signal corresponding to the p^{th} time unit comprises a ZC sequence with xᵢₚ as a root, and x_{iq} indicates that the pilot signal corresponding to the q^{th} time unit comprises a ZC sequence with x_{iq} as a root.

8. The method according to any one of claims 5 to 7, wherein the first matrix is a circulant matrix, or the first matrix is transformed into a circulant matrix through row exchange and/or column exchange.

9. The method according to claim 6, wherein the first matrix is a Hadamard (Hadamard) product of a second matrix and a third matrix.

10. The method according to claim 9, wherein
xᵢₚ indicates that the pilot signal corresponding to the p^{th} time unit comprises a sequence obtained by multiplying a ZC sequence with yᵢₚ as a root by a phase adjustment factor β*ᵢₚ*, yᵢₚ is an element in an i^{th} row and a p^{th} column of the second matrix, and the phase adjustment factor β*ᵢₚ* is an element in an i^{th} row and a p^{th} column of the third matrix; and
x_{iq} indicates that the pilot signal corresponding to the q^{th} time unit comprises a sequence obtained by multiplying a ZC sequence with y_{iq} as a root by a phase adjustment factor β*_{iq}*, y_{iq} is an element in an i^{th} row and a q^{th} column of the second matrix, and the phase adjustment factor β*_{iq}* is an element in an i^{th} row and a q^{th} column of the third matrix.

11. The method according to claim 9 or 10, wherein the second matrix is a circulant matrix or each row of the second matrix is the same, and the third matrix is a discrete Fourier transform DFT matrix or a Hadamard matrix.

12. The method according to claim 5 or 6, wherein K=2; a sequence comprised in the pilot signal corresponding to the p^{th} time unit when i=1 and a sequence comprised in the pilot signal corresponding to the q^{th} time unit when i=2 are conjugate to each other; and a sequence obtained by multiplying, by -1, a sequence comprised in the pilot signal corresponding to the p^{th} time unit when i=2 and a conjugate sequence of a sequence comprised in the pilot signal corresponding to the q^{th} time unit when i=1 are a same sequence.

13. The method according to claim 12, wherein the sequence comprised in the pilot signal corresponding to the p^{th} time unit when i=1 is a ZC sequence with x₁ as a root; and the sequence obtained by multiplying, by -1, the sequence comprised in the pilot signal corresponding to the p^{th} time unit when i=2 is a ZC sequence with x₂ as a root.

14. A pilot signal transmission method, applied to a network apparatus, and comprising:
respectively receiving, in at least two time units, corresponding pilot signals that are from a first terminal apparatus and that are transmitted through a channel; and
estimating the channel between the first terminal apparatus and the network apparatus based on the pilot signals that are transmitted through the channel and that respectively correspond to the at least two time units and pilot signals respectively corresponding to the at least two time units, wherein the pilot signals respectively corresponding to the at least two time units are different.

15. The method according to claim 14, wherein the first terminal apparatus and another terminal apparatus that is different from the first terminal apparatus send different pilot signals in a same time unit.

16. The method according to claim 14 or 15, wherein the pilot signals respectively corresponding to the at least two time units belong to a pilot signal set, the pilot signal set comprises K different pilot signals, and K is a positive integer greater than or equal to 2.

17. The method according to any one of claims 14 to 16, wherein roots of Zadoff-Chu ZC sequences comprised in the pilot signals respectively corresponding to the at least two time units belong to a root set, the root set comprises K different roots, and K is a positive integer greater than or equal to 2.

18. The method according to any one of claims 14 to 17, wherein the method further comprises:
sending indication information to the first terminal apparatus, wherein the indication information indicates that an identifier of the first terminal apparatus is i, or the indication information indicates an i^{th} row of a first matrix, i is a positive integer less than or equal to K, and K is a positive integer greater than or equal to 2; and the at least two time units, the indication information, and the first matrix are used by the first terminal apparatus to generate the pilot signals respectively corresponding to the at least two time units.

19. The method according to claim 18, wherein the at least two time units comprise a p^{th} time unit and a q^{th} time unit, p and q are positive integers, and p≠q; and that the at least two time units, the indication information, and the first matrix are used by the first terminal apparatus to generate the pilot signals respectively corresponding to the at least two time units comprises:
an element xᵢₚ in the i^{th} row and a p^{th} column of the first matrix is used by the first terminal apparatus to generate a pilot signal corresponding to the p^{th} time unit; and
an element x_{iq} in the i^{th} row and a q^{th} column of the first matrix is used by the first terminal apparatus to generate a pilot signal corresponding to the q^{th} time unit.

20. The method according to claim 19, wherein xᵢₚ indicates that the pilot signal corresponding to the p^{th} time unit comprises a ZC sequence with xᵢₚ as a root, and x_{iq} indicates that the pilot signal corresponding to the q^{th} time unit comprises a ZC sequence with x_{iq} as a root.

21. The method according to any one of claims 18 to 20, wherein the first matrix is a circulant matrix, or the first matrix is transformed into a circulant matrix through row exchange and/or column exchange.

22. The method according to claim 19, wherein the first matrix is a Hadamard (Hadamard) product of a second matrix and a third matrix.

23. The method according to claim 22, wherein
xᵢₚ indicates that the pilot signal corresponding to the p^{th} time unit comprises a sequence obtained by multiplying a ZC sequence with yᵢₚ as a root by a phase adjustment factor βᵢₚ, yᵢₚ is an element in an i^{th} row and a p^{th} column of the second matrix, and the phase adjustment factor β*ᵢₚ* is an element in an i^{th} row and a p^{th} column of the third matrix; and
x_{iq} indicates that the pilot signal corresponding to the q^{th} time unit comprises a sequence obtained by multiplying a ZC sequence with y_{iq} as a root by a phase adjustment factor β*_{iq}*, y_{iq} is an element in an i^{th} row and a q^{th} column of the second matrix, and the phase adjustment factor β*_{iq}* is an element in an i^{th} row and a q^{th} column of the third matrix.

24. The method according to claim 22 or 23, wherein the second matrix is a circulant matrix or each row of the second matrix is the same, and the third matrix is a discrete Fourier transform DFT matrix or a Hadamard matrix.

25. The method according to claim 18 or 19, wherein K=2; a sequence comprised in the pilot signal corresponding to the p^{th} time unit when i=1 and a sequence comprised in the pilot signal corresponding to the q^{th} time unit when i=2 are conjugate to each other; and a sequence obtained by multiplying, by -1, a sequence comprised in the pilot signal corresponding to the p^{th} time unit when i=2 and a conjugate sequence of a sequence comprised in the pilot signal corresponding to the q^{th} time unit when i=1 are a same sequence.

26. The method according to claim 25, wherein the sequence comprised in the pilot signal corresponding to the p^{th} time unit when i=1 is a ZC sequence with x₁ as a root; and the sequence obtained by multiplying, by -1, the sequence comprised in the pilot signal corresponding to the p^{th} time unit when i=2 is a ZC sequence with x₂ as a root.

27. A communication apparatus, wherein the communication apparatus comprises a module or a unit configured to implement the method according to any one of claims 1 to 13, or a module or a unit configured to implement the method according to any one of claims 14 to 26.

28. A communication apparatus, comprising a memory and a processor coupled to the memory, wherein the memory is configured to store a program, and the processor is configured to execute the program stored in the memory; and when the communication apparatus runs, the processor runs the program, so that the communication apparatus performs the method according to any one of claims 1 to 13; or the communication apparatus performs the method according to any one of claims 14 to 26.

29. A communication system, wherein the communication system comprises a first terminal apparatus and a network apparatus, the first terminal apparatus is configured to perform the method according to any one of claims 1 to 13, and the network apparatus is configured to perform the method according to any one of claims 14 to 26.

30. A computer-readable storage medium, wherein the computer-readable storage medium stores a computer program, and when the computer program is executed by a computer, the computer is enabled to perform the method according to any one of claims 1 to 13, or when the computer program is executed by a computer, the computer is enabled to perform the method according to any one of claims 14 to 26.
